# EUROPEAN PATENT SPECIFICATION

(11) **EP 0 631 004 B1**
(45) Date of publication and mention of the grant of the patent: **28.05.1997**
(21) Application number: 94304517.9
(22) Date of filing: 21.06.1994
(51) Int. Cl.: D06N 7/00, B32B 5/02, D04B 21/00

(54) **Wall cover**
Tapete
Revêtement mural

(30) Priority: 21.06.1993 US 78633
(43) Date of publication of application: 28.12.1994
(73) Proprietor: MILLIKEN RESEARCH CORPORATION, Spartanburg South Carolina 29304 (US)
(72) Inventor: Sanders, Kenneth Hoyt, Jonesville, SC 29353 (US)
(74) Representative: Pattullo, Norman

(56) References cited:
- US-A- 4 330 580
- US-A- 4 611 362
- US-A- 4 863 777
- DATABASE WPI Week 9135, Derwent Publications Ltd., London, GB; AN 91-253173 (35) & DD-A-288 635 (VEB PAPIERFAB GREIZ) 4 April 1991

## Description

This invention relates generally to wallcovering or panel covering fabrics and in particular to an inexpensive wallcovering which can be readily manufactured, easily installed and has a pleasant aesthetic effect upon installation.

Various wall-coverings are known in the art. For example, US-A-4,330,580 discloses a wall-covering in which a textile material, formed by the zig-zags of a crocheting machine, is chain-stitched onto a non-deformable backing material (such as paper) pre-coated with adhesive. Likewise US-A-4,863,777 describes a wall-covering having a coloured or printed paper backing sheet to which parallel warp and fill yarns are tricot stitched so that the design of the paper sheet shows through. The yarns are held firmly in place by a polyethylene film on the surface of the paper sheet. A further wall-covering type is described in Derwent Abstract No 91-253173 (of DD 288635). Here, a warp knit textile material is adhesive bonded to a carrier layer.

An object of the invention is to provide a wall product in which the backing thereof is produced more efficiently, economically and provides better geometrics.

The present invention provides a wallcovering having a weft inserted warp knit fabric as a substrate with the inserted weft yarn being cotton with a count in the range of 18's - 30's. (One example of a weft inserted warp knit fabric is set out in US-A-4,611,362). Specifically, the wall covering of present invention comprises a face material, a substrate fabric and an adhesive between said face material and said substrate fabric to maintain the face material adhered to said substrate fabric, said substrate fabric being a weft inserted warp knit fabric with the weft inserted yarn being cotton with a count in the range of 18's - 30's. The face material may be a plastics material or paper, but is preferably vinyl material.

Desirably the warp knit fabric is chain stitched.

Other objects and advantages of the invention will become readily apparent as the specification proceeds to describe the invention with reference to the accompanying drawing, in which:
Figure 1 is a schematic representation of the stitch arrangement of the supporting textile product of the wallcovering;
Figure 2 is a bottom view of the wallcovering, and;
Figure 3 is a cross-section view taken on line 3-3 of Figure 2.

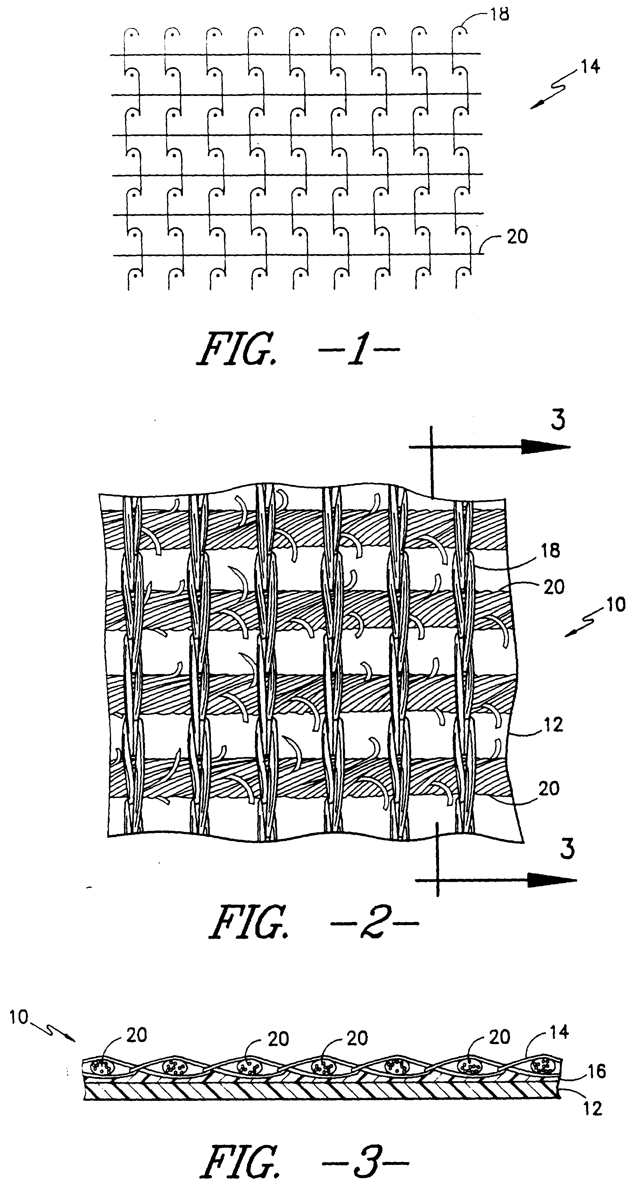

Looking now to the drawings, the reference numeral 10 refers to a wall covering with a face or outer material of plastic film or paper material 12 having a knit, weft inserted backing substrate 14 adhered to by a suitable adhesive 16 to provide structural integrity to the wall covering product 10.

In the preferred form of the invention the material 12 is a film material of a plastisol such as polyvinyl chloride and the adhesive 16 is an emulsion such as polyvinyl acetate. If the material 12 is of paper stock the adhesive could be a starch or a polyvinyl acetate solution.

As briefly stated the substrate 14 is a one-bar warp knit, weft inserted fabric made on a Raschel or tricot warp knitting machine. The stitch 18 is an open chain stitch of 40 or 70 denier, 34 filament polyester yarn while the weft inserted yarn 20 is a cotton staple yarn with a 27's cotton count. The yarn count of the yarn 20, cotton count, can be in the range of 18's to 30's with the preferred, as stated above, being a 27's count.

The weft inserted cotton yarn allows the manufacture of a wallpaper substrate fabric which can be produced rapidly at a reduced cost and provides structure integrity to the desired geometric design of the fabric.

## Claims

1. A wallcovering product (10) comprising: a face material (12), a substrate fabric (14) and an adhesive (16) between said face material (12) and said substrate fabric (14) to maintain the face material (12) adhered to said substrate fabric (14), characterised in that said substrate fabric (14) is a weft inserted warp knit fabric, and the weft inserted yarn (20) is cotton with a count in the range of 18's - 30's.

2. The product of Claim 1 wherein said face material (12) is vinyl.

3. The product of either of Claims 1 and 2 wherein said weft inserted yarn (20) has a count of 27.

4. The product of any one of Claims 1 to 3 wherein said warp knit fabric is chain stitched.

## Patentansprüche

1. Wandbespannungsprodukt bzw. Tapete (10) umfassend: Ein Oberflächenmaterial (12), einen Unterlagenstoff (14) und ein Klebemittel (16) zwischen dem Oberflächenmaterial (12) und dem Unterlagenstoff (14), damit das Oberflächenmaterial (12) an dem Unterlagenstoff (14) haftet,
dadurch gekennzeichnet, daß der Unterlagenstoff (14) eine Kettware mit eingefügten Schuß ist und der eingefügte Schußfaden (20) Baumwolle mit einer Fadenzahl im Bereich von 18 bis 30 ist.

2. Produkt nach Anspruch 1, wobei das Oberflächenmaterial (12) Vinyl ist.

3. Produkt nach einem der Ansprüche 1 und 2, wobei der eingefügte Schußfaden (20) eine Fadenzahl von 27 besitzt.

4. Produkt nach einem der Ansprüche 1 bis 3, wobei die Kettware in der Kette vernäht ist.

## Revendications

1. Produit de type revêtement mural (10) comprenant : un matériau d'endroit (12), une étoffe substrat (14) et un produit adhésif (16) entre ledit matériau d'endroit (12) et ladite étoffe substrat (14) pour maintenir le matériau d'endroit (12) fixé à ladite étoffe substrat (14), caractérisé en ce que ladite étoffe substrat (14) est un tricot à maille jetée à trame insérée et le fil de trame inséré (20) est du coton présentant un compte compris dans la gamme de 18 pieds à 30 pieds.

2. Produit selon la revendication 1, dans lequel ledit matériau d'endroit (12) est le vinyle.

3. Produit selon chacune des revendications 1 et 2, dans lequel ledit fil de trame inséré (20) possède un compte de 27.

4. Produit selon l'une quelconque des revendications 1 à 3, dans lequel ledit tricot à maille jetée est à point de chaînette.
